# EUROPEAN PATENT APPLICATION

(11) **EP 4 700 574 A1**
(43) Date of publication of application: **25.02.2026**
(21) Application number: 25180119.7
(22) Date of filing: 02.06.2025
(51) Int. Cl.: G06F 9/50

(54) **PROCESSING METHOD OF OBJECT STORAGE SERVICE BATCH PROCESSING TASK, ELECTRONIC APPARATUS AND STORAGE MEDIUM**

(30) Priority: 21.08.2024 CN 202411155249
(71) Applicant: Beijing Volcano Engine Technology Co., Ltd., Beijing 100190 (CN)
(72) Inventor: He, Chenglong, Beijing, 100028 (CN)
(74) Representative: Grünecker Patent- und Rechtsanwälte PartG mbB

(57) **Abstract**

A processing method of an object storage service batch processing task, an electronic apparatus and a storage medium are provided. The processing method includes: obtaining a bucket inventory batch processing task corresponding to each bucket inventory rule by using a bucket inventory service for an object storage; performing a task splitting respectively for each bucket inventory batch processing task based on a preset data amount, to obtain a plurality of batch processing sub-tasks corresponding to each bucket inventory batch processing task and having an execution priority order; and selecting a plurality of batch processing sub-tasks in sequence based on a bucket order of a storage bucket and the execution priority order, and triggering selected batch processing sub-tasks to be allocated and executed.

## Description

### CROSS-REFERENCE TO RELATED APPLICATION

This application claims priority to Chinese Patent Application No. 202411155249.X, filed August 21, 2024, which is incorporated herein by reference in its entirety as a part of this application.

### TECHNICAL FIELD

Embodiments of the present disclosure relate to a processing method of an object storage service batch processing task, an electronic apparatus and a storage medium.

### BACKGROUND

The bucket inventory function of an object storage may process data in a storage bucket according to a bucket inventory rule corresponding to the storage bucket, to generate an inventory file and store the inventory file in a specified bucket, thereby helping a user enumerate massive data.

However, when batch processing is performed on object data in a storage bucket, a next batch of tasks starts only after one batch of tasks is completed, and batch processing tasks corresponding to bucket inventory rules of different storage buckets have different data amounts to be processed. A bucket inventory service provided for a storage bucket with a relatively large amount of data may occupy a large amount of task execution resource, and it is difficult to ensure timeliness and fairness of the bucket inventory service provided for a storage bucket with a relatively small amount of data.

### SUMMARY

The present disclosure provides a processing method of an object storage service batch processing task, an electronic apparatus and a storage medium. A bucket inventory batch processing task corresponding to a single object storage bucket may be split and limited, so that a fair task distribution policy is implemented for object storage buckets with different levels of data amount, and it is ensured that each bucket inventory batch processing task has an execution resource, thereby achieving efficiency and fairness between the object storage buckets.

An embodiment of the present disclosure provides a processing method of an object storage service batch processing task, the method comprises: obtaining a bucket inventory batch processing task corresponding to each bucket inventory rule by using a bucket inventory service for an object storage, wherein each bucket inventory rule corresponds to one bucket inventory batch processing task, and a processing object of each bucket inventory batch processing task comprises a plurality of pieces of object data; performing a task splitting respectively for each bucket inventory batch processing task based on a preset data amount, to obtain a plurality of batch processing sub-tasks corresponding to each bucket inventory batch processing task and having an execution priority order; and selecting a plurality of batch processing sub-tasks corresponding to each bucket inventory batch processing task in sequence based on a bucket order of a storage bucket corresponding to each bucket inventory batch processing task and based on the execution priority order, and triggering selected batch processing sub-tasks to be allocated and executed.

An embodiment of the present disclosure further provides an electronic apparatus, the electronic apparatus comprises: at least a processor; and a non-transitory memory with instructions thereon, with instructions thereon, wherein the instructions upon execution by the at least a processor, cause the at least a processor to implement a processing method of an object storage service batch processing task according to any embodiment of the present disclosure.

An embodiment of the present disclosure further provides a non-transitory computer-readable storage medium storing instructions that cause at least a processor to implement a processing method of an object storage service batch processing task according to any embodiment of the present disclosure.

### BRIEF DESCRIPTION OF DRAWINGS

The above and other features, advantages, and aspects of the embodiments of the present disclosure will become more apparent with reference to the following specific implementations in conjunction with the drawings. Throughout the drawings, the same or similar reference numerals refer to the same or similar elements. It should be understood that the drawings are schematic and that members and elements are not necessarily drawn to scale.
Fig. 1 is a flowchart of a processing method of an object storage service batch processing task according to an embodiment of the present disclosure;
Fig. 2 is a flowchart of a processing method of an object storage service batch processing task according to an embodiment of the present disclosure;
Fig. 3 is a flowchart of a processing method of an object storage service batch processing task according to an embodiment of the present disclosure;
Fig. 4 is a flowchart of a processing method of an object storage service batch processing task according to an embodiment of the present disclosure;
Fig. 5 is a schematic diagram of an implementation process of an application example of a processing method of an object storage service batch processing task according to an embodiment of the present disclosure;
Fig. 6 is a schematic diagram of task splitting in an application example according to an embodiment of the present disclosure;
Fig. 7 is a schematic diagram of multi-round task distribution in an application example according to an embodiment of the present disclosure;
Fig. 8 is a schematic structural diagram of a processing device of an object storage service batch processing task according to an embodiment of the present disclosure; and
Fig. 9 is a schematic structural diagram of an electronic apparatus according to an embodiment of the present disclosure.

### DETAILED DESCRIPTION

The embodiments of the present disclosure are described in more detail below with reference to the drawings. Although some embodiments of the present disclosure are shown in the drawings, it should be understood that the present disclosure may be implemented in various manners, and should not be construed as being limited to the embodiments set forth herein. On the contrary, these embodiments are provided for a more thorough and complete understanding of the present disclosure. It should be understood that the drawings and the embodiments of the present disclosure are only for illustrative purposes, and are not intended to limit the protection scope of the present disclosure.

It should be understood that the steps described in the method implementations of the present disclosure may be performed in a different order and/or in parallel. In addition, the method implementations may include additional steps and/or omit the steps shown. The scope of the present disclosure is not limited in this respect.

The term "include/comprise" and its variations used herein are open-ended inclusions, that is, "include/comprise but not limited to". The term "based on" is "at least partially based on". The term "one embodiment" means "at least one embodiment"; the term "another embodiment" means "at least one another embodiment"; and the term "some embodiments" means "at least some embodiments". Related definitions of other terms will be given in the following description.

It should be noted that the concepts such as "first" and "second" mentioned in the present disclosure are only used to distinguish different apparatuses, modules or units, and are not used to limit the order or interdependence of the functions performed by these apparatuses, modules or units.

It should be noted that the modifications of "one" and "a plurality of" mentioned in the present disclosure are illustrative and non-restrictive, and those skilled in the art should understand that unless the context clearly indicates otherwise, it should be understood as "one or more".

It may be understood that before the technical solutions disclosed in the embodiments of the present disclosure are used, the user should be informed of the type, usage scope, usage scenario, etc. of the personal information involved in the present disclosure in an appropriate manner according to relevant laws and regulations, and the user's authorization should be obtained.

For example, in response to receiving an active request from the user, prompt information is sent to the user to explicitly prompt the user that the operation requested to be performed will require the acquisition and use of the user's personal information. Thus, the user may autonomously select whether to provide personal information to software or hardware such as an electronic device, an application, a server, or a storage medium that performs the operation of the technical solution of the present disclosure according to the prompt information.

As an optional but non-limiting implementation, the manner of sending the prompt information to the user in response to receiving the active request from the user may be, for example, a pop-up window, and the prompt information may be presented in the form of text in the pop-up window. In addition, the pop-up window may carry a selection control for the user to select "agree" or "disagree" to provide personal information to the electronic device.

It may be understood that the foregoing process of notifying and obtaining the user's authorization is only illustrative and does not constitute a limitation on implementations of the present disclosure, and other manners that satisfy relevant laws and regulations may also be applied to the implementations of the present disclosure.

It may be understood that the data involved in the technical solution (including but not limited to the data itself, the acquisition or use of the data) should comply with the requirements of corresponding laws, regulations and related provisions.

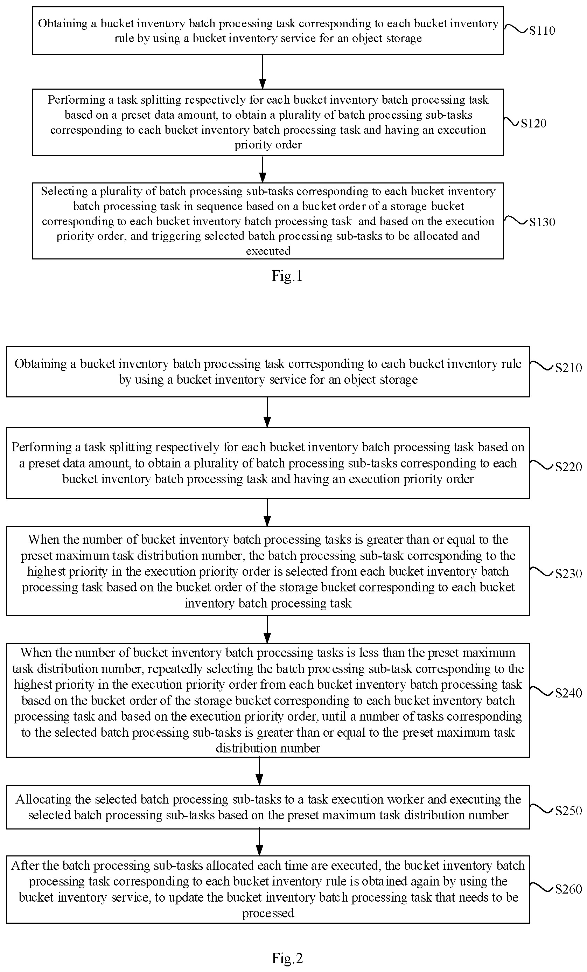

Fig. 1 is a flowchart of a processing method of an object storage service batch processing task according to an embodiment of the present disclosure. The embodiment of the present disclosure is applicable to a scenario of scheduling and managing a data processing task corresponding to a storage bucket in object storage. The method may be performed by a processing device of an object storage service batch processing task. The device may be implemented in the form of software and/or hardware. Optionally, the processing device of an object storage service batch processing task may be implemented by an electronic apparatus, and the electronic apparatus may be a mobile terminal, a PC, a server, or the like.

As shown in Fig. 1, the processing method of the object storage service batch processing task includes the following steps.

In S110, obtaining a bucket inventory batch processing task corresponding to each bucket inventory rule by using a bucket inventory service for an object storage.

The bucket inventory batch processing task may be a task corresponding to a bucket inventory rule of an object data storage bucket. Each bucket inventory rule corresponds to one bucket inventory batch processing task, and a processing object of each bucket inventory batch processing task includes a plurality of pieces of object data.

In the field of object storage, file data is stored in a key-value pair format, where a file name is a key, and the file data is a value. The key-value pair is referred to as an object. A storage bucket is a container for storing object data. All object data must belong to a specific storage bucket and may be considered as a namespace.

Each storage bucket may be configured with one or more bucket inventory rules defined by a user. Each bucket inventory rule may correspond to one bucket inventory batch processing task. In the bucket inventory rule, it may be defined that each bucket inventory batch processing task is executed by day or by week. A range of enumerated object data may be defined, for example, object data with a specified prefix, or only specific metadata information of an object, such as object size, storage type, and last update date information, is enumerated. When the object data in the storage bucket satisfies a condition such as a specified prefix, the object data may be selected, an inventory is generated, and the inventory is stored in a specified storage bucket.

The bucket inventory service is a service provided by an object storage server for processing object data in a storage bucket based on a bucket inventory rule. A specific service may be implemented by providing operation interfaces such as object uploading, deleting, and storage type conversion on the object storage server.

The bucket inventory batch processing task corresponding to each bucket inventory rule is obtained by using the bucket inventory service for object storage. The task may be obtained from a consumption queue message of a corresponding bucket inventory batch processing task queue, or may be obtained from a preset task information list or a task obtaining interface. The obtained bucket inventory batch processing tasks may include a plurality of bucket inventory batch processing tasks corresponding to a plurality of bucket inventory rules of one storage bucket, or may include a plurality of bucket inventory batch processing tasks corresponding to a plurality of bucket inventory rules corresponding to a plurality of storage buckets.

In S120, performing a task splitting respectively for each bucket inventory batch processing task based on a preset data amount, to obtain a plurality of batch processing sub-tasks corresponding to each bucket inventory batch processing task and having an execution priority order.

Generally, in the process of processing a bucket inventory batch processing task, each bucket inventory rule corresponds to one bucket inventory batch processing task. Accordingly, bucket inventory batch processing tasks corresponding to storage buckets with different levels of data amount have different task processing times. A batch processing task corresponding to a storage bucket with a large data amount level may occupy a large amount of execution resources for a long time, thereby blocking the execution of bucket inventory batch processing tasks corresponding to bucket inventory rules of other storage buckets. As a result, each bucket cannot fairly allocate the execution resources, especially a storage bucket with a small data amount level cannot fairly allocate the execution resources. A bucket inventory batch processing task corresponding to a bucket inventory rule of the storage bucket with a small data amount level may not be executed for a long time.

In the embodiment, after the bucket inventory batch processing task is obtained, the bucket inventory batch processing task may be split to obtain a corresponding batch processing sub-task. That is, each bucket inventory batch processing task is split to obtain a plurality of batch processing sub-tasks, so that the data amount level corresponding to a single allocated and processed bucket inventory batch processing task is reduced, and the timeliness of the bucket inventory batch processing task is ensured.

When the task splitting is performed, the task splitting may be performed separately based on the preset data amount, to obtain the plurality of batch processing sub-tasks corresponding to each bucket inventory batch processing task and having the execution priority order. That is, each batch processing sub-task corresponds to the same data amount.

The execution priority order of the batch processing sub-tasks may be determined based on a data order in the storage bucket, or the batch processing sub-tasks may be obtained through splitting randomly or based on a specific rule.

For example, the execution priority order of the batch processing sub-task in the corresponding bucket inventory batch processing task is determined based on a data order of the batch processing sub-task in the corresponding bucket inventory batch processing task.

The splitting order of the batch processing sub-task in the corresponding bucket inventory batch processing task may be an execution order of the corresponding sub-task when the bucket inventory batch processing task is performed the task splitting. It may be understood that the data order depends on a data sequence of the object data in the corresponding storage bucket. For example, in a case where an amount of object data in a storage bucket is 10 million pieces of data, the task splitting may be performed in a unit of 1 million pieces of data, and the 10 million pieces of data in the storage bucket are split based on a default data sorting. For every 1 million pieces of data, one corresponding batch processing sub-task is obtained through splitting. Alternatively, the task splitting may be performed in a unit of object data generation time in the storage bucket, and the object data in every three consecutive hours is split into one corresponding batch processing sub-task based on a data generation time order. The execution priority order of the corresponding batch processing sub-task is determined by the order of the batch processing sub-tasks obtained through splitting. A batch processing sub-task obtained through splitting first has a higher execution priority order.

In S130, selecting a plurality of batch processing sub-tasks corresponding to each bucket inventory batch processing task in sequence based on a bucket order of a storage bucket corresponding to each bucket inventory batch processing task and based on the execution priority order, and triggering selected batch processing sub-tasks to be allocated and executed.

The bucket order of the storage bucket may be a lexicographical order corresponding to storage bucket identifications, or may be a randomly generated order.

Specifically, a batch processing sub-task with a high execution priority may be selected from the plurality of batch processing sub-tasks corresponding to each bucket inventory batch processing task based on the bucket order of the storage bucket corresponding to each bucket inventory batch processing task, until the number of selected batch processing sub-tasks reaches a preset maximum task distribution number.

The preset maximum task distribution number may be a preset maximum task distribution number in one task distribution, and may be greater than or equal to the number of task execution resources. The task execution resource may be a preset worker. That is, only a fixed number of batch processing sub-tasks are distributed every time. After the batch processing sub-tasks distributed once are processed, other batch processing sub-tasks are re-selected and distributed.

Specifically, in one task distribution round, each bucket inventory batch processing task is equal, and the task processing order is not affected by different corresponding bucket inventory rules and different numbers of objects, thereby affecting the timeliness of the task completion. In each bucket inventory batch processing task, the batch processing sub-task corresponding to the highest execution priority order is distributed to the corresponding worker based on the execution priority order, and batch processing sub-tasks corresponding to the highest execution priority order of the plurality of bucket inventory batch processing tasks whose number is the same as the preset maximum task distribution number may be processed in a same batch processing task batch. If the number of bucket inventory batch processing tasks is less than the preset maximum task distribution number, the corresponding batch processing sub-task may be selected again from each bucket inventory batch processing task based on the execution priority order, and the task distribution and processing are performed together.

Based on the fair distribution policy in the step, it is ensured that the storage buckets with different numbers of objects may perform the to-be-processed tasks in parallel. When the service system is scaled up, the scaled-up amount may also be evenly distributed to the bucket inventory batch processing tasks of each storage bucket, and there will be no resource skew limitation. In addition, the number of tasks in a single batch may effectively control the execution duration of each batch of tasks, and give more opportunities to participate in the distribution to the bucket inventory batch processing tasks corresponding to the new bucket inventory rule, which may effectively improve the use experience of the object storage service.

In the embodiment, the bucket inventory batch processing task corresponding to each bucket inventory rule is obtained by using the bucket inventory service for object storage, where each bucket inventory rule corresponds to one bucket inventory batch processing task, and the processing object of each bucket inventory batch processing task includes a plurality of pieces of object data; the task is split separately for each bucket inventory batch processing task based on the preset data amount, to obtain the plurality of batch processing sub-tasks corresponding to each bucket inventory batch processing task and having the execution priority order; and the plurality of batch processing sub-tasks corresponding to each bucket inventory batch processing task are selected in sequence based on the bucket order of the storage bucket corresponding to each bucket inventory batch processing task and based on the execution priority order, and the selected batch processing sub-tasks are triggered to be allocated and executed. According to the technical solutions of the embodiments of the present disclosure, the problem that fairness and efficiency cannot be balanced between the bucket inventory batch processing tasks corresponding to the bucket inventory rules of the object storage buckets in the bucket inventory service is solved. The bucket inventory batch processing task corresponding to the single bucket inventory rule is split and limited, so that the fair task distribution and processing policy is implemented for the object storage buckets with different data amount levels, and it is ensured that each bucket inventory batch processing task has an execution resource, thereby achieving efficiency and fairness between the bucket inventory batch processing tasks corresponding to the bucket inventory rules.

Fig. 2 is a flowchart of a processing method of an object storage service batch processing task according to an embodiment of the present disclosure. On the basis of the foregoing embodiment, a process of task distribution in the process of implementing the processing method workflow of an object storage service batch processing task is further explained. The method may be performed by a processing device of an object storage service batch processing task. The device may be implemented in the form of software and/or hardware. Optionally, the device may be implemented by an electronic apparatus, and the electronic apparatus may be a mobile terminal, a PC, a server, or the like.

As shown in Fig. 2, the processing method of an object storage service batch processing task includes the following steps.

In S210, obtaining a bucket inventory batch processing task corresponding to each bucket inventory rule by using a bucket inventory service for an object storage.

Each bucket inventory rule corresponds to one bucket inventory batch processing task, and a processing object of each bucket inventory batch processing task includes a plurality of pieces of object data.

In S220, performing a task splitting respectively for each bucket inventory batch processing task based on a preset data amount, to obtain a plurality of batch processing sub-tasks corresponding to each bucket inventory batch processing task and having an execution priority order.

A task data amount corresponding to each batch processing sub-task is less than or equal to the preset data amount. That is, in this embodiment, the bucket inventory batch processing task is split based on a fixed data amount. In a result of the task splitting, the data amount corresponding to each batch processing sub-task does not exceed the preset data amount.

In the current bucket inventory service, the task processing time after one task distribution round, that is, the working duration of one task execution resource, is not controlled. In one batch task processing execution process, a newly created bucket inventory batch processing task just participates in a next task distribution round only after the execution of a current batch processing task is finished. The waiting time is uncontrollable, which seriously affects the timeliness of the bucket inventory service.

In the embodiment, the maximum value of the data amount processed by each batch processing sub-task is defined, that is, the data amount of each batch processing sub-task is limited by an upper limit, and the task processing time is also controlled, thereby further ensuring the processing timeliness of the bucket inventory batch processing task. S230 or S240 may be performed based on the quantitative relationship between the number of bucket inventory batch processing tasks and the preset maximum task distribution number.

In S230, when the number of bucket inventory batch processing tasks is greater than or equal to the preset maximum task distribution number, the batch processing sub-task corresponding to the highest priority in the execution priority order is selected from each bucket inventory batch processing task based on the bucket order of the storage bucket corresponding to each bucket inventory batch processing task.

The preset maximum task distribution number may correspond to the amount of execution resources that support the bucket inventory batch processing task. For example, if the amount of execution resources that support the bucket inventory batch processing task is ten workers, the preset maximum task distribution number is ten. In one task distribution, ten batch processing sub-tasks may be selected and distributed.

The bucket inventory batch processing task corresponding to each bucket inventory rule is fair. When the batch processing sub-task is selected, the batch processing sub-task corresponding to the highest priority in the execution priority order is selected from the batch processing sub-tasks corresponding to each bucket inventory batch processing task based on the bucket order of the storage bucket corresponding to each bucket inventory batch processing task. Accordingly, the number of selected batch processing sub-tasks is also greater than or equal to the preset maximum task distribution number.

In S240, when the number of bucket inventory batch processing tasks is less than the preset maximum task distribution number, repeatedly selecting the batch processing sub-task corresponding to the highest priority in the execution priority order from each bucket inventory batch processing task based on the bucket order of the storage bucket corresponding to each bucket inventory batch processing task and based on the execution priority order, until a number of tasks corresponding to the selected batch processing sub-tasks is greater than or equal to the preset maximum task distribution number.

Based on the fairness principle of the bucket inventory batch processing task corresponding to each bucket inventory rule, when the batch processing sub-task is selected, the batch processing sub-task corresponding to the highest priority in the execution priority order is selected from the batch processing sub-task corresponding to each bucket inventory batch processing task based on the bucket order of the storage bucket corresponding to each bucket inventory batch processing task. When the number of bucket inventory batch processing tasks is less than the preset maximum task distribution number, the number of selected batch processing sub-tasks is less than the preset maximum task distribution number, indicating that if the batch processing sub-tasks are selected only once, there is the execution resources of the bucket inventory batch processing task which is in an idle state. To improve the utilization of task execution resources, the batch processing sub-task corresponding to the highest priority in the execution priority order may be repeatedly selected from each bucket inventory batch processing task, until the number of tasks corresponding to the selected batch processing sub-tasks is greater than or equal to the preset maximum task distribution number.

For example, there are three bucket inventory batch processing tasks and ten corresponding workers. For the first time, the batch processing sub-task corresponding to the highest priority in the execution priority order is selected from the batch processing sub-tasks corresponding to each bucket inventory batch processing task based on the bucket order of the storage bucket corresponding to each bucket inventory batch processing task, and the batch processing sub-task with the highest execution priority order is selected respectively from the three bucket inventory batch processing tasks. At this time, there are still idle execution resources, and the second, third, and fourth task selection may be performed to select the batch processing sub-tasks whose task number is greater than or equal to the preset maximum task distribution number.

In S250, allocating the selected batch processing sub-tasks to a task execution worker and executing the selected batch processing sub-tasks based on the preset maximum task distribution number.

Specifically, the task number of batch processing sub-tasks selected in S230 or S240 is greater than or equal to the preset maximum task distribution number. The batch processing sub-tasks corresponding to the preset maximum task distribution number in the selected batch processing sub-tasks may be allocated to the task execution worker and executed based on the execution priority order and the bucket order corresponding to each selected batch processing sub-task in the selected batch processing sub-tasks. If there are remaining batch processing sub-tasks that are not allocated and executed, the unallocated batch processing sub-task in the selected batch processing sub-tasks is used as an allocation object for the next round task allocation until all the selected batch processing sub-tasks are allocated and executed.

When the task number of the selected batch processing sub-tasks is the same as the preset maximum task distribution number, it may be determined that one task allocation is completed, and then the batch processing sub-tasks may be distributed to the corresponding worker to perform the bucket inventory batch processing task.

In S260, after the batch processing sub-tasks allocated each time are executed, the bucket inventory batch processing task corresponding to each bucket inventory rule is obtained again by using the bucket inventory service, to update the bucket inventory batch processing task that needs to be processed.

After the selected batch processing sub-tasks in the current task distribution round are distributed and processed, a next task distribution round may be started. In the next task distribution round, a new bucket inventory batch processing task is obtained by using the bucket inventory service, and the new bucket inventory batch processing task that needs to be processed may be added to the next task distribution round, without waiting for the old task to finish executing before starting a new task.

Exemplarily, there are three bucket inventory batch processing tasks (A, B, and C) and five corresponding workers. The three bucket inventory batch processing tasks are split separately to obtain batch processing sub-tasks A1, A2, A3, B1, B2, C1, C2, C3, and C4. The batch processing sub-tasks selected for the first time are A1, B1, and C1. The batch processing sub-tasks selected for the second time are A2, B2, and C2. The number of selected batch processing sub-tasks is six, which is greater than the number of workers. The task allocation and execution process may be triggered. The first task distribution allocates A1, B1, C1, A2, and B2 to corresponding workers for execution based on the bucket order and the execution priority order.

Then, the bucket inventory batch processing task corresponding to each bucket inventory rule is obtained again by using the bucket inventory service, to update the bucket inventory batch processing task that needs to be processed, so as to obtain the bucket inventory batch processing task D. D is split into D1 and D2. Then, the batch processing sub-tasks may be selected, including A3, C2, D1, C3, and D2. The second task distribution allocates D1, C2, D2, A3, and C3 to corresponding workers for execution based on the bucket order and the execution priority order.

According to the technical solutions of the embodiments of the present disclosure, the bucket inventory batch processing task corresponding to each bucket inventory rule is obtained by using the bucket inventory service for object storage; the task is split separately for each bucket inventory batch processing task based on the preset data amount, to obtain the plurality of batch processing sub-tasks corresponding to each bucket inventory batch processing task and having the execution priority order; when the number of bucket inventory batch processing tasks is greater than or equal to the preset maximum task distribution number, the batch processing sub-task corresponding to the highest priority in the execution priority order is selected from each bucket inventory batch processing task based on the bucket order of the storage bucket corresponding to each bucket inventory batch processing task; when the number of bucket inventory batch processing tasks is less than the preset maximum task distribution number, the batch processing sub-task corresponding to the highest priority in the execution priority order is repeatedly selected from each bucket inventory batch processing task based on the bucket order of the storage bucket corresponding to each bucket inventory batch processing task and based on the execution priority order, until the number of tasks corresponding to the selected batch processing sub-tasks is greater than or equal to the preset maximum task distribution number; and the selected batch processing sub-tasks are allocated to the task execution worker and executed based on the preset maximum task distribution number. According to the technical solutions of the embodiments of the present disclosure, the problem that fairness and efficiency cannot be balanced between the bucket inventory batch processing tasks corresponding to the bucket inventory rules of the object storage buckets in the bucket inventory service is solved. The bucket inventory batch processing task corresponding to the single storage bucket may be split and the data amount of the single sub-task may be limited, so that the fair task distribution policy is implemented for the storage buckets with different data levels, and it is ensured that the newly created bucket inventory batch processing task corresponding to the bucket inventory rule has the execution resource, thereby further improving the efficiency and fairness of the bucket inventory service between the storage buckets.

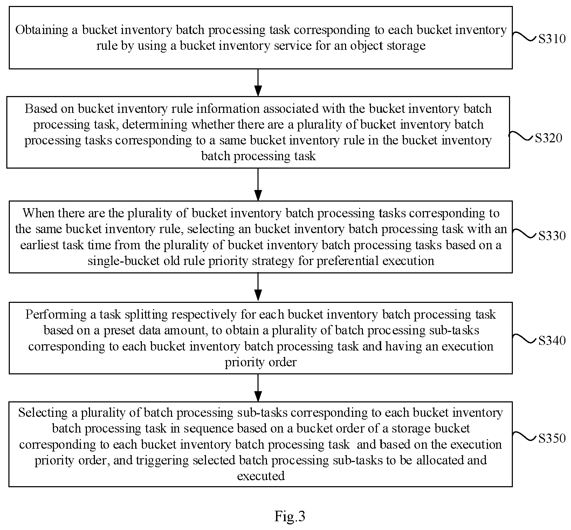

Fig. 3 is a flowchart of a processing method of an object storage service batch processing task according to an embodiment of the present disclosure. On the basis of the foregoing embodiment, in the process of implementing the processing method of an object storage service batch processing task, a process of managing an old bucket inventory batch processing task and a new bucket inventory batch processing task of a same bucket inventory rule is further explained. The method may be performed by a processing device of an object storage service batch processing task. The device may be implemented in the form of software and/or hardware. Optionally, the device may be implemented by an electronic apparatus, and the electronic apparatus may be a mobile terminal, a PC, a server, or the like.

As shown in Fig. 3, the processing method of an object storage service batch processing task includes the following steps.

In S310, obtaining a bucket inventory batch processing task corresponding to each bucket inventory rule by using a bucket inventory service for an object storage.

In S320, based on bucket inventory rule information associated with the bucket inventory batch processing task, determining whether there are a plurality of bucket inventory batch processing tasks corresponding to a same bucket inventory rule in the bucket inventory batch processing task.

Generally, in the bucket inventory service, the bucket inventory batch processing tasks corresponding to the bucket inventory rule of each storage bucket are considered to have the same priority, and one bucket inventory rule corresponds to one bucket inventory batch processing task. When a task spans days (one bucket inventory batch processing task is not finished when a time reaches 00:00), one bucket inventory rule of the storage bucket may simultaneously correspond to yesterday's bucket inventory batch processing task (old) and today's bucket inventory batch processing task (new), that is, one storage bucket corresponds to two bucket inventory batch processing tasks. In terms of the bucket dimension, this storage bucket occupies two execution resources, which is also unfair for other storge buckets. When this phenomenon occurs in a storage bucket with a large data amount level, the unfairness to a storage bucket with a small data amount level will be further magnified.

In this embodiment, after the bucket inventory batch processing task is obtained, it is first determined, based on the bucket inventory rule information corresponding to the bucket inventory batch processing task, whether there is more than one bucket inventory batch processing tasks associated with the same bucket inventory rule. That is, it is found out whether there is one storage bucket corresponds to two or more new and old bucket inventory batch processing tasks corresponding to one bucket inventory rule. When two or more bucket inventory batch processing tasks associated with one bucket inventory rule identification information are found, it may be determined that there is an associated inventory task to be processed in the bucket inventory batch processing tasks that corresponds to the same bucket inventory rule.

In S330, when there are the plurality of bucket inventory batch processing tasks corresponding to the same bucket inventory rule, selecting a bucket inventory batch processing task with an earliest task time from the plurality of bucket inventory batch processing tasks based on a single-bucket old rule priority strategy for preferential execution.

When there are a plurality of bucket inventory batch processing tasks corresponding to the same bucket inventory rule, in order to ensure that each bucket inventory rule corresponds to one bucket inventory batch processing task, one bucket inventory batch processing task with the earliest task time is selected from the plurality of bucket inventory batch processing tasks based on the single-bucket old rule priority strategy for preferential execution. That is, in a scenario where there is a cross-day bucket inventory batch processing task, in order to ensure that all bucket inventory batch processing tasks can be fairly scheduled, the task splitting and task distribution management operations of the plurality of bucket inventory batch processing tasks corresponding to the same bucket inventory rule are paused. That is, when there is an unfinished old task corresponding to one bucket inventory rule, only the unfinished old task may participate in task distribution scheduling and is preferentially processed, and the corresponding new bucket inventory batch processing task does not participate in task splitting and distribution.

Exemplarily, the bucket inventory batch processing task corresponding to the bucket inventory rule A has a cross-day task. The rule A corresponds to three bucket inventory batch processing tasks, including two old tasks, one of which is unfinished and the other is not processed, and one new task is remained. At this time, the task corresponding to the rule A that participates in task splitting and task distribution is only the one unfinished old task, and the old task that is not processed and the new task are paused.

In S340, performing a task splitting respectively for each bucket inventory batch processing task based on a preset data amount, to obtain a plurality of batch processing sub-tasks corresponding to each bucket inventory batch processing task and having an execution priority order.

In S350, selecting a plurality of batch processing sub-tasks corresponding to each bucket inventory batch processing task in sequence based on a bucket order of a storage bucket corresponding to each bucket inventory batch processing task and based on the execution priority order, and triggering selected batch processing sub-tasks to be allocated and executed.

According to the technical solutions of the embodiments of the present disclosure, the bucket inventory batch processing task corresponding to each bucket inventory rule is obtained by using the bucket inventory service for an object storage; whether there are a plurality of bucket inventory batch processing tasks corresponding to the same bucket inventory rule in the bucket inventory batch processing tasks is determined based on the bucket inventory rule information associated with the bucket inventory batch processing task; when there are the plurality of bucket inventory batch processing tasks corresponding to the same bucket inventory rule, the bucket inventory batch processing task with the earliest task time is selected from the plurality of bucket inventory batch processing tasks based on the single-bucket old rule priority strategy for preferential execution; the task splitting is performed separately for each bucket inventory batch processing task based on the preset data amount, to obtain the plurality of batch processing sub-tasks corresponding to each bucket inventory batch processing task and having the execution priority order; and the plurality of batch processing sub-tasks corresponding to each bucket inventory batch processing task are selected in sequence based on the bucket order of the storage bucket corresponding to each bucket inventory batch processing task and based on the execution priority order, and the selected batch processing sub-tasks are triggered to be allocated and executed. According to the technical solutions of the embodiments of the present disclosure, the problem of unfairness caused by one storage bucket occupying a plurality of task execution resources when a cross-day task occurs in one bucket inventory rule in the bucket inventory service is solved. The efficiency and fairness of the bucket inventory service between the storage buckets may be further improved by using the single-bucket old task priority strategy.

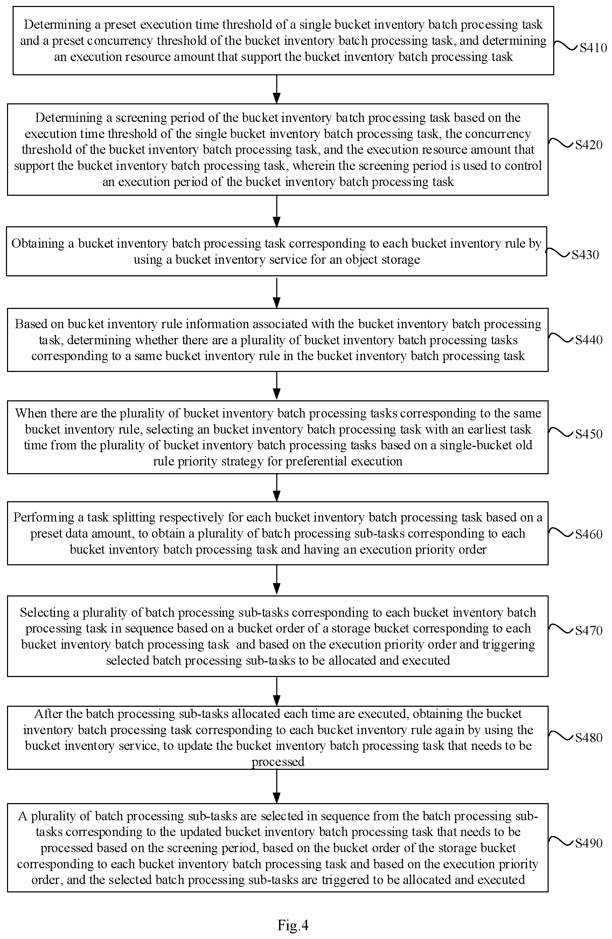

Fig. 4 is a flowchart of a processing method of an object storage service batch processing task according to an embodiment of the present disclosure. On the basis of the foregoing embodiment, in the process of implementing the processing method of an object storage service batch processing task, a process of managing an old bucket inventory batch processing task and a new bucket inventory batch processing task for a same bucket inventory rule is further explained. The method may be performed by a processing device of an object storage service batch processing task. The device may be implemented in the form of software and/or hardware. Optionally, the device may be implemented by an electronic apparatus, and the electronic apparatus may be a mobile terminal, a PC, a server, or the like.

As shown in Fig. 4, the processing method of an object storage service batch processing task includes the following steps.

In S410, determining a preset execution time threshold of a single bucket inventory batch processing task and a preset concurrency threshold of the bucket inventory batch processing task, and determining an execution resource amount that support the bucket inventory batch processing task.

In the bucket inventory service, a service manager may preset the execution time threshold of the single bucket inventory batch processing task, the concurrency threshold of the bucket inventory batch processing task, and the execution resource amount that support the bucket inventory batch processing task, to manage the processing process of the bucket inventory batch processing task.

The execution time threshold of the single bucket inventory batch processing task defines the duration of one task executed by one worker to some extent. If one task is not completed when the execution time of the task reaches the execution time threshold, the lifecycle of the worker ends, to avoid long-term occupation of the worker. Accordingly, the execution time threshold also defines the preset data amount for guiding the task splitting in the subsequent bucket inventory batch processing task splitting process, to ensure that each batch processing sub-task can be completed within the execution time threshold when the operation is normal.

The concurrency threshold of the bucket inventory batch processing task is the task number corresponding to the bucket inventory batch processing tasks that can be processed at the same time, that is, the number of bucket inventory rules that are processed at the same time.

The execution resource amount that support the bucket inventory batch processing task may correspond to the preset maximum task distribution number.

In S420, determining a screening period of the bucket inventory batch processing task based on the execution time threshold of the single bucket inventory batch processing task, the concurrency threshold of the bucket inventory batch processing task, and the execution resource amount that support the bucket inventory batch processing task, wherein the screening period is used to control an execution period of the bucket inventory batch processing task.

In each task distribution round, the number of target distribution tasks corresponds to the execution resource amount of the bucket inventory batch processing task, and the execution time of the task when each task execution resource processes the task is limited by the execution time threshold, and accordingly, the processing time of each round of task is also controlled.

It is assumed that each batch processing sub-task is defined to execute for m minutes, and n batch processing sub-tasks are distributed every time. In the case where there are t execution resources, the longest execution time of all batch processing sub-tasks in the task distribution round is m*n/t minutes. That is, taking m*n/t minutes as the longest execution period, after every m*n/t minutes, the batch processing sub-tasks in the next task distribution round will be re-selected and distributed, and the newly created bucket inventory batch processing task may be executed after at most m*n/t minutes. In addition, this time may also be shortened by increasing the value of t. The timeliness of the bucket inventory batch processing task may be controlled at an hourly level, which greatly improves the experience of the user of the bucket inventory service.

After the task flow management parameters of the bucket inventory service are determined, the bucket inventory batch processing task that needs to be processed may be executed based on the screening period of the corresponding bucket inventory batch processing task.

In S430, obtaining a bucket inventory batch processing task corresponding to each bucket inventory rule by using a bucket inventory service for an object storage.

In S440, based on bucket inventory rule information associated with the bucket inventory batch processing task, determining whether there are a plurality of bucket inventory batch processing tasks corresponding to a same bucket inventory rule in the bucket inventory batch processing task.

In S450, when there are the plurality of bucket inventory batch processing tasks corresponding to the same bucket inventory rule, selecting a bucket inventory batch processing task with an earliest task time from the plurality of bucket inventory batch processing tasks based on a single-bucket old rule priority strategy for preferential execution.

In S460, performing a task splitting respectively for each bucket inventory batch processing task based on a preset data amount, to obtain a plurality of batch processing sub-tasks corresponding to each bucket inventory batch processing task and having an execution priority order.

In S470, selecting a plurality of batch processing sub-tasks corresponding to each bucket inventory batch processing task in sequence based on a bucket order of a storage bucket corresponding to each bucket inventory batch processing task and based on the execution priority order, and triggering selected batch processing sub-tasks to be allocated and executed.

In S480, after the batch processing sub-tasks allocated each time are executed, obtaining the bucket inventory batch processing task corresponding to each bucket inventory rule again by using the bucket inventory service, to update the bucket inventory batch processing task that needs to be processed.

In S490, a plurality of batch processing sub-tasks are selected in sequence from the batch processing sub-tasks corresponding to the updated bucket inventory batch processing task that needs to be processed based on the screening period, based on the bucket order of the storage bucket corresponding to each bucket inventory batch processing task and based on the execution priority order, and the selected batch processing sub-tasks are triggered to be allocated and executed.

In this embodiment, a preset configuration solution of the execution time threshold, the concurrency threshold of the bucket inventory batch processing task, and the execution resource amount is provided. The preset execution time threshold of the single bucket inventory batch processing task and the preset concurrency threshold of the bucket inventory batch processing task may be determined based on a configuration result, and the execution resource amount that support the bucket inventory batch processing task is determined. Then, the screening period of the bucket inventory batch processing task is determined based on the execution time threshold of the single bucket inventory batch processing task, the concurrency threshold of the bucket inventory batch processing task, and the execution resource amount that support the bucket inventory batch processing task, where the screening period is used to control the execution period of the bucket inventory batch processing task, to manage the process of the bucket inventory service. Fairness and efficiency of the bucket inventory batch processing tasks corresponding to the bucket inventory rules of the object storage buckets are achieved.

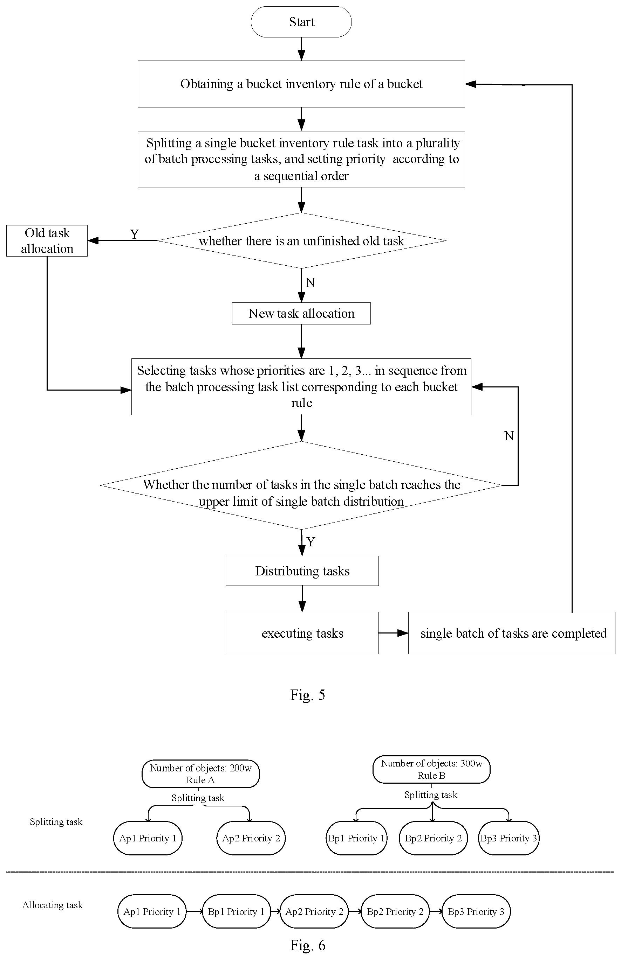

In a specific application example of the processing method of an object storage service batch processing task, the process of processing the object storage service batch processing task may be referred to Fig. 5. Specifically, the process includes the following steps.

First, after processing of the object storage service batch processing task is started, the bucket inventory rule of the bucket is obtained regularly or based on the processing progress of each batch of tasks, that is, the bucket inventory batch processing task corresponding to the bucket inventory rule of the storage bucket is obtained.

Then, the single bucket inventory rule task is split into a plurality of batch processing tasks (corresponding to the batch processing sub-tasks in the foregoing embodiments), and priority is set according to a sequential order.

Before the task (batch processing sub-task) distribution, whether there is an unfinished old task is determined. That is, whether one bucket has a cross-day task of one bucket inventory rule is determined. If yes, the old task in the cross-day task participates in task distribution. Otherwise, the new task directly participates in task distribution.

During the task distribution, the tasks participating in distribution in the current task distribution round are selected in sequence from the batch processing task list corresponding to each bucket rule based on the priority.

Whether the number of tasks participating in distribution in the single batch reaches the upper limit of batch distribution is determined. If yes, the tasks are distributed and then executed. Otherwise, the step returns to selecting the tasks in sequence from the batch processing task list corresponding to each bucket rule based on the priority.

After the single batch of tasks are executed, the bucket inventory rule may be obtained again.

Further, when the single bucket inventory rule task is split into a plurality of batch processing tasks, the splitting process may be referred to a schematic diagram of the process shown in Fig. 6.

In Fig. 6, when the bucket inventory rule is obtained, two bucket inventory rules, rule A and rule B, are obtained. The batch processing task is split based on the data processing amount, where the storage bucket a corresponding to the rule A has 200w pieces of data, and the storage bucket b corresponding to rule B has 300w pieces of data. If the batch processing task is split based on the data amount of 100w, rule A corresponds to two batch processing tasks, with priorities of priority 1 and priority 2, and the tasks may be expressed as Ap1 and Ap2, respectively. Rule B corresponds to three batch processing tasks, with priorities of priority 1, priority 2, and priority 3, and the tasks may be expressed as Bp1, Bp2, and Bp3, respectively. Then, the tasks may be distributed based on the priorities, and the priorities are selected in sequence, for example, 1, 2, 3, and so on. The execution sequence of the distributed batch processing is Ap1, Bp1, Ap2, Bp2, and Bp3.

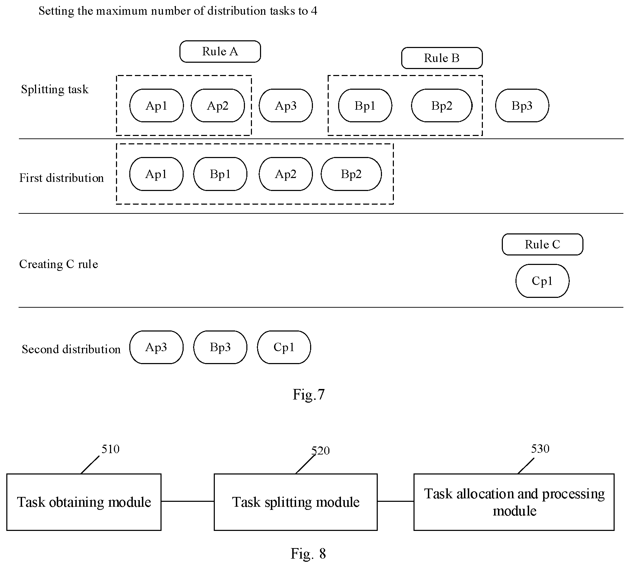

In Fig. 7, the maximum number of tasks distributed in a single batch is set to 4. The tasks may be distributed until the maximum number of distributed tasks is reached. If there is no task to be distributed before the maximum number of distributed tasks is reached, all the tasks are distributed. For example, at this time, rule A and rule B exist at the same time, rule A corresponds to three tasks, and rule B corresponds to three tasks. According to the priorities, two tasks of rule A and two tasks of rule B may be selected for distribution in the first distribution, and the remaining tasks wait for the next distribution. After all the tasks distributed for the first time are executed, all the bucket inventory rules are re-obtained. At this time, if there is a newly created bucket inventory rule, the newly created bucket inventory rule may be obtained in the step. For example, the new rule C corresponds to one task. At this time, the tasks to be distributed include one task of rule A, one task of rule B, and one task of rule C. Then, the task may be selected from the tasks to be distributed for distribution in the second distribution until all the tasks are distributed. Starting from the second distribution, the task of the new rule (rule C) will participate in the task distribution without waiting for the processing of all the tasks corresponding to all the rules to be completed, and the timeliness is ensured.

Fig. 8 is a processing device of an object storage service batch processing task according to an embodiment of the present disclosure. The device is applicable to a scenario of scheduling and managing a data processing task in an object storage bucket in object storage. The processing device of an object storage service batch processing task may be implemented in the form of software and/or hardware, and may be configured on an electronic apparatus. The electronic apparatus may be a mobile terminal, a PC, a server, or the like.

As shown in Fig. 8, the processing device of an object storage service batch processing task includes a task obtaining module 510, a task splitting module 520, and a task allocation and processing module 530.

The task obtaining module 510 is configured to obtain a bucket inventory batch processing task corresponding to each bucket inventory rule by using a bucket inventory service for an object storage, where each bucket inventory rule corresponds to one bucket inventory batch processing task, and a processing object of each bucket inventory batch processing task includes a plurality of pieces of object data; the task splitting module 520 is configured to split a task separately for each bucket inventory batch processing task based on a preset data amount, to obtain a plurality of batch processing sub-tasks corresponding to each bucket inventory batch processing task and having an execution priority order; and the task allocation and processing module 530 is configured to select a plurality of batch processing sub-tasks corresponding to each bucket inventory batch processing task in sequence based on a bucket order of the storage bucket corresponding to each bucket inventory batch processing task and based on the execution priority order, and trigger the selected batch processing sub-tasks to be allocated and executed.

According to the technical solutions of the embodiments of the present disclosure, the bucket inventory batch processing task corresponding to each bucket inventory rule is obtained by using the bucket inventory service for object storage, where each bucket inventory rule corresponds to one bucket inventory batch processing task, and the processing object of each bucket inventory batch processing task includes a plurality of pieces of object data; the task is split separately for each bucket inventory batch processing task based on the preset data amount, to obtain the plurality of batch processing sub-tasks corresponding to each bucket inventory batch processing task and having the execution priority order; and the plurality of batch processing sub-tasks corresponding to each bucket inventory batch processing task are selected in sequence based on the bucket order of the storage bucket corresponding to each bucket inventory batch processing task and based on the execution priority order, and the selected batch processing sub-tasks are triggered to be allocated and executed. According to the technical solutions of the embodiments of the present disclosure, the problem that fairness and efficiency cannot be balanced between the bucket inventory batch processing tasks corresponding to the bucket inventory rules of the object storage buckets in the bucket inventory service is solved. The bucket inventory batch processing task corresponding to the single bucket inventory rule may be split and limited, so that the fair task distribution and processing strategy is implemented for the buckets with different data amount levels, and it is ensured that each bucket inventory batch processing task has an execution resource, thereby achieving efficiency and fairness between the bucket inventory batch processing tasks corresponding to the bucket inventory rules.

In an optional implementation, the task allocation and processing module 530 may be further configured to:
when the number of bucket inventory batch processing tasks is greater than or equal to a preset maximum task distribution number, select the batch processing sub-task corresponding to the highest priority in the execution priority order from each bucket inventory batch processing task based on the bucket order of the storage bucket corresponding to each bucket inventory batch processing task; and
allocate the selected batch processing sub-tasks to a task execution worker and execute the selected batch processing sub-tasks based on the preset maximum task distribution number.

In an optional implementation, the task allocation and processing module 530 may be further configured to:
allocate the batch processing sub-tasks corresponding to the preset maximum task distribution number in the selected batch processing sub-tasks to the task execution worker and execute the batch processing sub-tasks based on the execution priority order and the bucket order corresponding to each batch processing sub-task in the selected batch processing sub-tasks; and
use the unallocated batch processing sub-task in the selected batch processing sub-tasks as an allocation object for the next task allocation until all the selected batch processing sub-tasks are allocated and executed.

In an optional implementation, the task allocation and processing module 530 may be further configured to:
when the number of bucket inventory batch processing tasks is less than the preset maximum task distribution number, repeatedly select the batch processing sub-task corresponding to the highest priority in the execution priority order from each bucket inventory batch processing task based on the bucket order of the storage bucket corresponding to each bucket inventory batch processing task and based on the execution priority order, until the number of tasks corresponding to the selected batch processing sub-tasks is greater than or equal to the preset maximum task distribution number.

In an optional implementation, the task obtaining module 510 may be further configured to:
after obtaining the bucket inventory batch processing task corresponding to each bucket inventory rule, determine whether there are a plurality of bucket inventory batch processing tasks corresponding to a same bucket inventory rule in the bucket inventory batch processing tasks based on bucket inventory rule information associated with the bucket inventory batch processing tasks; and
when there are the plurality of bucket inventory batch processing tasks corresponding to the same bucket inventory rule, select the bucket inventory batch processing task with the earliest task time from the plurality of bucket inventory batch processing tasks based on the single-bucket old rule priority strategy for preferential execution.

In an optional implementation, the task obtaining module 510 may be further configured to:
after the batch processing sub-tasks allocated each time are executed, obtain the bucket inventory batch processing task corresponding to each bucket inventory rule again by using the bucket inventory service, to update the bucket inventory batch processing task that needs to be processed.

In an optional implementation, the processing device of an object storage service batch processing task further includes a task execution management module, configured to:
determine a preset execution time threshold of a single bucket inventory batch processing task and a preset concurrency threshold of a bucket inventory batch processing task, and determine an execution resource amount that support the bucket inventory batch processing task; and
determine a screening period of the bucket inventory batch processing task based on the execution time threshold of the single bucket inventory batch processing task, the concurrency threshold of the bucket inventory batch processing task, and the execution resource amount that support the bucket inventory batch processing task, where the screening period is used to control an execution period of the bucket inventory batch processing task.

The processing device of an object storage service batch processing task provided in the embodiment of the present disclosure may perform the processing method of an object storage service batch processing task provided in any embodiment of the present disclosure, and has corresponding functional modules for performing the method and beneficial effects.

It should be noted that the units and modules included in the foregoing device are only divided according to functional logic, but are not limited to the foregoing division, as long as the corresponding functions can be implemented. In addition, specific names of the functional units are only for distinguishing from each other, and are not intended to limit the protection scope of the embodiments of the present disclosure.

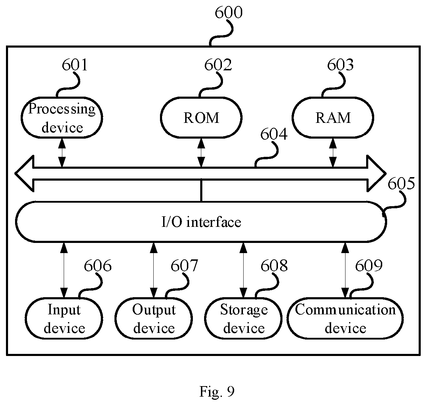

Fig. 9 is a schematic structural diagram of an electronic apparatus according to an embodiment of the present disclosure. Reference is made to Fig. 9 below, which illustrates a schematic structural diagram of an electronic apparatus 600 (such as a terminal apparatus or a server in Fig. 9) suitable for implementing the embodiments of the present disclosure. The terminal apparatus in the embodiment of the present disclosure may include, but is not limited to, a mobile terminal such as a mobile phone, a notebook computer, a digital broadcast receiver, a personal digital assistant (PDA), a tablet computer, a portable multimedia player (PMP), and a vehicle-mounted terminal (such as a vehicle-mounted navigation terminal), and a fixed terminal such as a digital TV and a desktop computer. The electronic apparatus shown in Fig. 9 is only an example, and should not impose any limitation on the function and usage scope of the embodiments of the present disclosure.

As shown in Fig. 9, the electronic apparatus 600 may include a processing device (such as a central processing unit, a graphics processor, etc.) 601. The processing device 601 may perform various suitable actions and processing according to a program stored in a read-only memory (ROM) 602 or a program loaded from a storage device 608 into a random access memory (RAM) 603. The RAM 603 further stores various programs and data required for the operation of the electronic apparatus 600. The processing device 601, the ROM 602, and the RAM 603 are connected to each other through a bus 604. An edit/output (I/O) interface 605 is also connected to the bus 605.

Generally, the following devices may be connected to the I/O interface 605: an input device 606 including, for example, a touch screen, a touchpad, a keyboard, a mouse, a camera, a microphone, an accelerometer, a gyroscope, etc.; an output device 607 including, for example, a liquid crystal display (LCD), a speaker, a vibrator, etc.; a storage apparatus 608 including, for example, a magnetic tape, a hard disk, etc.; and a communication device 609. The communication device 609 may allow the electronic apparatus 600 to perform wireless or wired communication with other devices to exchange data. Although Fig. 9 illustrates the electronic apparatus 600 having various devices, it should be understood that not all of the illustrated devices are necessarily implemented or included. Alternatively, more or fewer devices may be implemented or included.

In particular, according to the embodiments of the present disclosure, the processes described above with reference to the flowcharts may be implemented as a computer software program. For example, an embodiment of the present disclosure includes a computer program product, which includes a computer program carried on a non-transitory computer-readable medium. The computer program includes program codes for executing the methods shown in the flowcharts. In such an embodiment, the computer program may be downloaded from a network through the communication device 609 and installed, or may be installed from the storage device 608, or may be installed from the ROM 602. When the computer program is executed by the processing device 601, the above functions defined in the methods of the embodiments of the present disclosure are implemented.

The names of messages or information exchanged between a plurality of devices in the implementations of the present disclosure are only used for illustrative purposes, and are not intended to limit the scope of these messages or information.

The electronic apparatus provided in the embodiment of the present disclosure belongs to the same inventive concept as the processing method of an object storage service batch processing task provided in the foregoing embodiment. For the technical details not described in detail in this embodiment, reference may be made to the foregoing embodiment, and this embodiment and the foregoing embodiment have the same beneficial effects.

An embodiment of the present disclosure further provides a computer storage medium. The computer storage medium is configured to store a computer program, and when the program is executed by a processor, the processing method of an object storage service batch processing task provided in the foregoing embodiment is implemented.

It should be noted that the computer-readable medium in the present disclosure may be a computer-readable signal medium or a computer-readable storage medium or any combination thereof. The computer-readable storage medium may be, for example, but not limited to, an electrical, magnetic, optical, electromagnetic, infrared, or semiconductor system, apparatus, or device, or any combination thereof. More specific examples of the computer-readable storage medium may include, but are not limited to, an electrical connection with one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination thereof. In the present disclosure, the computer-readable storage medium may be any tangible medium that contains or stores a program, and the program may be used by or in combination with an instruction execution system, apparatus, or device. In the present disclosure, the computer-readable signal medium may include a data signal propagated in baseband or as part of a carrier wave, where computer-readable program codes are carried in the data signal. The data signal propagated in this manner may be in various forms, including, but not limited to, an electromagnetic signal, an optical signal, or any suitable combination thereof. The computer-readable signal medium may also be any computer-readable medium other than the computer-readable storage medium, and the computer-readable signal medium may send, propagate, or transmit a program used by or in combination with an instruction execution system, apparatus, or device. The program codes contained on the computer-readable medium may be transmitted by any suitable medium, including, but not limited to, a wire, an optical cable, radio frequency (RF), etc., or any suitable combination thereof.

In some implementations, clients and servers may communicate using any currently known or future developed network protocol, such as the Hypertext transfer protocol (HTTP), and may be interconnected with any form or medium of digital data communication (for example, a communication network). Examples of the communication network include a local area network ("LAN"), a wide area network ("WAN"), an internet (for example, the Internet), and a peer-to-peer network (for example, an ad hoc network), as well as any currently known or future developed network.

The foregoing computer-readable medium may be included in the foregoing electronic device, or may exist alone without being assembled into the electronic device.

The foregoing computer-readable medium carries one or more programs, and when the one or more programs are executed by the electronic apparatus, the electronic apparatus is caused to:
obtain a bucket inventory batch processing task corresponding to each bucket inventory rule by using a bucket inventory service for an object storage, wherein each bucket inventory rule corresponds to one bucket inventory batch processing task, and a processing object of each bucket inventory batch processing task comprises a plurality of pieces of object data;
perform a task splitting respectively for each bucket inventory batch processing task based on a preset data amount, to obtain a plurality of batch processing sub-tasks corresponding to each bucket inventory batch processing task and having an execution priority order; and
select a plurality of batch processing sub-tasks corresponding to each bucket inventory batch processing task in sequence based on a bucket order of a storage bucket corresponding to each bucket inventory batch processing task and based on the execution priority order, and triggering selected batch processing sub-tasks to be allocated and executed.

The computer program codes for performing the operations of the present disclosure may be written in one or more programming languages or a combination thereof. The foregoing programming languages include object-oriented programming languages such as Java, Smalltalk, and C++ and conventional procedural programming languages such as C or similar programming languages. The program codes may be executed entirely on a user computer, executed partly on a user computer, executed as a stand-alone software package, executed partly on a user computer and partly on a remote computer, or executed entirely on a remote computer or a server. In the case of the remote computer, the remote computer may be connected to the user computer through any kind of network, including a local area network (LAN) or a wide area network (WAN), or may be connected to an external computer (for example, through the Internet using an Internet service provider).

The flowcharts and block diagrams in the drawings illustrate the architecture, functions, and operations of possible implementations of the system, method, and computer program product according to various embodiments of the present disclosure. In this regard, each block in the flowchart or block diagram may represent a module, a program segment, or a portion of codes. The module, the program segment, or the portion of codes includes one or more executable instructions for implementing specified logical functions. It should also be noted that, in some alternative implementations, the functions indicated in the blocks may be implemented in an order different from those indicated in the drawings. For example, two blocks shown in succession may, in fact, be executed substantially concurrently, or the two blocks may sometimes be executed in a reverse order, depending on the functions involved. It should also be noted that each block of the block diagram and/or flowchart and the combination of blocks in the block diagram and/or flowchart may be implemented by a dedicated hardware-based system that performs the specified functions or operations or may be implemented by a combination of dedicated hardware and computer instructions.

The units involved in the embodiments of the present disclosure may be implemented in software or hardware. The name of the unit does not constitute a limitation on the unit itself under certain circumstances. For example, a first acquisition unit may also be described as "a unit for acquiring at least two Internet protocol addresses".

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on a chip (SOC), a complex programmable logical device (CPLD), etc.

In the context of the present disclosure, a machine-readable medium may be a tangible medium that may contain or store a program for use by or in combination with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the foregoing. More specific examples of the machine-readable storage medium may include an electrical connection with one or more wires, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

An embodiment of the present disclosure further provides a computer program product, including a computer program which, when executed by a processor, implements the batch processing task processing method for an object storage service as provided in any one of embodiments of the present disclosure.

In the implementation process of the computer program product, the computer program codes for executing the operations of the present disclosure may be written in one or more programming languages or a combination thereof. The programming languages include object-oriented programming languages such as Java, Smalltalk, and C++ and conventional procedural programming languages such as C or similar programming languages. The program codes may be executed entirely on a user computer, executed partly on a user computer, executed as a stand-alone software package, executed partly on a user computer and partly on a remote computer, or executed entirely on a remote computer or a server. In the case of the remote computer, the remote computer may be connected to the user computer through any kind of network, including a local area network (LAN) or a wide area network (WAN), or may be connected to an external computer (for example, through the Internet using an Internet service provider).

The above description is only preferred embodiments of the present disclosure and an illustration of the applied technical principles. Those skilled in the art should understand that the scope of disclosure involved in the present disclosure is not limited to the technical solution formed by the specific combination of the above technical features, and should also cover other technical solutions formed by any combination of the above technical features or equivalent features thereof without departing from the above disclosure concept. For example, a technical solution formed by replacing the above features with technical features with similar functions disclosed in the present disclosure (but not limited to).

In addition, although operations are depicted in a particular order, this should not be understood as requiring these operations to be performed in the particular order shown or in a sequential order. Under certain circumstances, multitasking and parallel processing may be advantageous. Likewise, although the above discussion contains several specific implementation details, these should not be construed as limiting the scope of the present disclosure. Certain features that are described in the context of separate embodiments may also be implemented in combination in a single embodiment. Conversely, various features described in the context of a single embodiment may also be implemented in multiple embodiments individually or in any suitable sub-combination.

Although the subject matter has been described in language specific to structural features and/or logical actions of the methods, it should be understood that the subject matter defined in the appended claims is not necessarily limited to the specific features or actions described above. Rather, the specific features and actions described above are merely example forms of implementing the claims.

## Claims

1. A processing method of an object storage service batch processing task, comprising:
obtaining a bucket inventory batch processing task corresponding to each bucket inventory rule (A; B; C) by using a bucket inventory service for an object storage, wherein each bucket inventory rule (A; B; C) corresponds to one bucket inventory batch processing task, and a processing object of each bucket inventory batch processing task comprises a plurality of pieces of object data;
performing a task splitting respectively for each bucket inventory batch processing task based on a preset data amount, to obtain a plurality of batch processing sub-tasks (Ap1, Ap2; Bp1, Bp2, Bp3; Cp1) corresponding to each bucket inventory batch processing task and having an execution priority order; and
selecting a plurality of batch processing sub-tasks (Ap1, Bp1, Ap2, Bp2; Ap3, Bp3, Cp1; Ap1, Bp1, Ap2, Bp2, Bp3) corresponding to each bucket inventory batch processing task in sequence based on a bucket order of a storage bucket corresponding to each bucket inventory batch processing task and based on the execution priority order, and triggering selected batch processing sub-tasks (Ap1, Bp1, Ap2, Bp2; Ap3, Bp3, Cp1; Ap1, Bp1, Ap2, Bp2, Bp3) to be allocated and executed.

2. The method according to claim 1, wherein the selecting a plurality of batch processing sub-tasks (Ap1, Bp1, Ap2, Bp2; Ap3, Bp3, Cp1; Ap1, Bp1, Ap2, Bp2, Bp3) corresponding to each bucket inventory batch processing task in sequence based on a bucket order of a storage bucket corresponding to each bucket inventory batch processing task and based on the execution priority order, and triggering selected batch processing sub-tasks (Ap1, Bp1, Ap2, Bp2; Ap3, Bp3, Cp1; Ap1, Bp1, Ap2, Bp2, Bp3) to be allocated and executed comprises:
when a number of bucket inventory batch processing tasks is greater than or equal to a preset maximum task distribution number, selecting a batch processing sub-task corresponding to a highest priority in the execution priority order from each bucket inventory batch processing task based on the bucket order of the storage bucket corresponding to each bucket inventory batch processing task; and
allocating the selected batch processing sub-tasks (Ap1, Bp1, Ap2, Bp2; Ap3, Bp3, Cp1; Ap1, Bp1, Ap2, Bp2, Bp3) to a task execution worker and executing the selected batch processing sub-tasks (Ap1, Bp1, Ap2, Bp2; Ap3, Bp3, Cp1; Ap1, Bp1, Ap2, Bp2, Bp3) based on the preset maximum task distribution number.

3. The method according to claim 2, wherein the allocating the selected batch processing sub-tasks (Ap1, Bp1, Ap2, Bp2; Ap3, Bp3, Cp1; Ap1, Bp1, Ap2, Bp2, Bp3) to a task execution worker and executing the selected batch processing sub-tasks (Ap1, Bp1, Ap2, Bp2; Ap3, Bp3, Cp1; Ap1, Bp1, Ap2, Bp2, Bp3) based on the preset maximum task distribution number comprises:
based on the execution priority order and the bucket order corresponding to each batch processing sub-task of the selected batch processing sub-tasks (Ap1, Bp1, Ap2, Bp2; Ap3, Bp3, Cp1; Ap1, Bp1, Ap2, Bp2, Bp3), allocating the batch processing sub-tasks whose number corresponds to the preset maximum task distribution number in the selected batch processing sub-tasks (Ap1, Bp1, Ap2, Bp2; Ap3, Bp3, Cp1; Ap1, Bp1, Ap2, Bp2, Bp3) to the task execution worker and executing the batch processing sub-tasks; and
using an unallocated batch processing sub-task in the selected batch processing sub-tasks (Ap1, Bp1, Ap2, Bp2; Ap3, Bp3, Cp1; Ap1, Bp1, Ap2, Bp2, Bp3) as an allocation object for a next task allocation until all of the selected batch processing sub-tasks (Ap1, Bp1, Ap2, Bp2; Ap3, Bp3, Cp1; Ap1, Bp1, Ap2, Bp2, Bp3) are allocated and executed.

4. The method according to claim 2, wherein the selecting a plurality of batch processing sub-tasks (Ap1, Bp1, Ap2, Bp2; Ap3, Bp3, Cp1; Ap1, Bp1, Ap2, Bp2, Bp3) corresponding to each bucket inventory batch processing task in sequence based on a bucket order of a storage bucket corresponding to each bucket inventory batch processing task and based on the execution priority order, and triggering selected batch processing sub-tasks (Ap1, Bp1, Ap2, Bp2; Ap3, Bp3, Cp1; Ap1, Bp1, Ap2, Bp2, Bp3) to be allocated and executed further comprises:
when the number of bucket inventory batch processing tasks is less than the preset maximum task distribution number, repeatedly selecting the batch processing sub-task corresponding to the highest priority in the execution priority order from each bucket inventory batch processing task based on the bucket order of the storage bucket corresponding to each bucket inventory batch processing task and based on the execution priority order, until a number of tasks corresponding to the selected batch processing sub-tasks (Ap1, Bp1, Ap2, Bp2; Ap3, Bp3, Cp1; Ap1, Bp1, Ap2, Bp2, Bp3) is greater than or equal to the preset maximum task distribution number.

5. The method according to claim 1, wherein, after the obtaining a bucket inventory batch processing task corresponding to each bucket inventory rule (A; B; C), the method further comprises:
based on bucket inventory rule information associated with the bucket inventory batch processing task, determining whether there are a plurality of bucket inventory batch processing tasks corresponding to a same bucket inventory rule (A; B; C) in the bucket inventory batch processing task; and
when there are the plurality of bucket inventory batch processing tasks corresponding to the same bucket inventory rule (A; B; C), selecting a bucket inventory batch processing task with an earliest task time from the plurality of bucket inventory batch processing tasks based on a single-bucket old rule priority strategy for preferential execution.

6. The method according to any one of claims 1 to 5, wherein the method further comprises:
after the batch processing sub-tasks allocated each time are executed, obtaining the bucket inventory batch processing task corresponding to each bucket inventory rule (A; B; C) again by using the bucket inventory service, to update the bucket inventory batch processing task that needs to be processed.

7. The method according to any one of claims 1 to 5, wherein the method further comprises:
determining a preset execution time threshold of a single bucket inventory batch processing task and a preset concurrency threshold of the bucket inventory batch processing task, and determining an execution resource amount that support the bucket inventory batch processing task; and
determining a screening period of the bucket inventory batch processing task based on the execution time threshold of the single bucket inventory batch processing task, the concurrency threshold of the bucket inventory batch processing task, and the execution resource amount that support the bucket inventory batch processing task, wherein the screening period is used to control an execution period of the bucket inventory batch processing task.

8. An electronic apparatus (600), comprising:
at least a processor (601); and
a non-transitory memory (602, 603) with instructions thereon, wherein the instructions upon execution by the at least a processor (601), cause the at least a processor (601) to implement the processing method of an object storage service batch processing task according to any one of claims 1 to 7.

9. The electronic apparatus (600) according to claim 8, wherein the selecting a plurality of batch processing sub-tasks (Ap1, Bp1, Ap2, Bp2; Ap3, Bp3, Cp1; Ap1, Bp1, Ap2, Bp2, Bp3) corresponding to each bucket inventory batch processing task in sequence based on a bucket order of a storage bucket corresponding to each bucket inventory batch processing task and based on the execution priority order, and triggering selected batch processing sub-tasks (Ap1, Bp1, Ap2, Bp2; Ap3, Bp3, Cp1; Ap1, Bp1, Ap2, Bp2, Bp3) to be allocated and executed comprises:
when a number of bucket inventory batch processing tasks is greater than or equal to a preset maximum task distribution number, selecting a batch processing sub-task corresponding to a highest priority in the execution priority order from each bucket inventory batch processing task based on the bucket order of the storage bucket corresponding to each bucket inventory batch processing task; and
allocating the selected batch processing sub-tasks (Ap1, Bp1, Ap2, Bp2; Ap3, Bp3, Cp1; Ap1, Bp1, Ap2, Bp2, Bp3) to a task execution worker and executing the selected batch processing sub-tasks (Ap1, Bp1, Ap2, Bp2; Ap3, Bp3, Cp1; Ap1, Bp1, Ap2, Bp2, Bp3) based on the preset maximum task distribution number.

10. The electronic apparatus (600) according to claim 9, wherein the allocating the selected batch processing sub-tasks (Ap1, Bp1, Ap2, Bp2; Ap3, Bp3, Cp1; Ap1, Bp1, Ap2, Bp2, Bp3) to a task execution worker and executing the selected batch processing sub-tasks (Ap1, Bp1, Ap2, Bp2; Ap3, Bp3, Cp1; Ap1, Bp1, Ap2, Bp2, Bp3) based on the preset maximum task distribution number comprises:
based on the execution priority order and the bucket order corresponding to each batch processing sub-task of the selected batch processing sub-tasks (Ap1, Bp1, Ap2, Bp2; Ap3, Bp3, Cp1; Ap1, Bp1, Ap2, Bp2, Bp3), allocating the batch processing sub-tasks whose number corresponds to the preset maximum task distribution number in the selected batch processing sub-tasks (Ap1, Bp1, Ap2, Bp2; Ap3, Bp3, Cp1; Ap1, Bp1, Ap2, Bp2, Bp3) to the task execution worker and executing the batch processing sub-tasks; and
using an unallocated batch processing sub-task in the selected batch processing sub-tasks (Ap1, Bp1, Ap2, Bp2; Ap3, Bp3, Cp1; Ap1, Bp1, Ap2, Bp2, Bp3) as an allocation object for a next task allocation until all of the selected batch processing sub-tasks (Ap1, Bp1, Ap2, Bp2; Ap3, Bp3, Cp1; Ap1, Bp1, Ap2, Bp2, Bp3) are allocated and executed.

11. The electronic apparatus (600) according to claim 9, wherein the selecting a plurality of batch processing sub-tasks (Ap1, Bp1, Ap2, Bp2; Ap3, Bp3, Cp1; Ap1, Bp1, Ap2, Bp2, Bp3) corresponding to each bucket inventory batch processing task in sequence based on a bucket order of a storage bucket corresponding to each bucket inventory batch processing task and based on the execution priority order, and triggering selected batch processing sub-tasks (Ap1, Bp1, Ap2, Bp2; Ap3, Bp3, Cp1; Ap1, Bp1, Ap2, Bp2, Bp3) to be allocated and executed further comprises:
when the number of bucket inventory batch processing tasks is less than the preset maximum task distribution number, repeatedly selecting the batch processing sub-task corresponding to the highest priority in the execution priority order from each bucket inventory batch processing task based on the bucket order of the storage bucket corresponding to each bucket inventory batch processing task and based on the execution priority order, until a number of tasks corresponding to the selected batch processing sub-tasks (Ap1, Bp1, Ap2, Bp2; Ap3, Bp3, Cp1; Ap1, Bp1, Ap2, Bp2, Bp3) is greater than or equal to the preset maximum task distribution number.

12. The electronic apparatus (600) according to claim 8, wherein after the obtaining a bucket inventory batch processing task corresponding to each bucket inventory rule (A; B; C), the method further comprises:
based on bucket inventory rule information associated with the bucket inventory batch processing task, determining whether there are a plurality of bucket inventory batch processing tasks corresponding to a same bucket inventory rule (A; B; C) in the bucket inventory batch processing task; and
when there are the plurality of bucket inventory batch processing tasks corresponding to the same bucket inventory rule (A; B; C), selecting a bucket inventory batch processing task with an earliest task time from the plurality of bucket inventory batch processing tasks based on a single-bucket old rule priority strategy for preferential execution.

13. The electronic apparatus (600) according to any one of claims 8 to 12, wherein the method further comprises:
after the batch processing sub-tasks allocated each time are executed, obtaining the bucket inventory batch processing task corresponding to each bucket inventory rule (A; B; C) again by using the bucket inventory service, to update the bucket inventory batch processing task that needs to be processed.

14. A non-transitory computer-readable storage medium storing instructions that cause at least a processor (601) to implement the processing method of an object storage service batch processing task according to any one of claims 1 to 7.

15. A computer program product, comprising a computer program, wherein the computer program, when executed by a processor (601), implements the processing method of an object storage service batch processing task according to any one of claims 1 to 7.
